# EUROPEAN PATENT APPLICATION

(11) **EP 4 024 589 A1**
(43) Date of publication of application: **06.07.2022**
(21) Application number: 20217948.7
(22) Date of filing: 31.12.2020
(51) Int. Cl.: H01M 50/231, H01M 50/229, H01M 50/224, H01M 50/222, H01M 50/242, H01M 10/658, H01M 50/124

(54) **THERMAL BARRIER ASSEMBLIES CONTAINING INSULATION PASTES**

(71) Applicant: 3M Innovative Properties Company, Saint Paul, MN 55133-3427 (US)
(72) Inventor: Kunze, Mr. Ulrich, 41363 Juechen (DE); Rosen, Kerstin Christina, 50670 Köln (DE); Schaschke, Martin, 58708 Menden (DE)
(74) Representative: Hettstedt, Stephan

(57) **Abstract**

In one aspect of the present disclosure, there is provided a battery protection composite construction, comprising
(a) At least one mesh or fabric comprising at least one material selected from metals, carbon fiber, and ceramic fiber, and any combinations and mixtures thereof; and
(b) At least one inorganic insulation layer;
(c) Optionally, at least one metal layer;
(d) Optionally, at least one layer distinct from (a), (b) and (c).

## Description

### Technical Field

The disclosure relates to a battery protection composite construction. Further, the present disclosure further relates to a method for making such a battery protection composite construction. Moreover, the present disclosure further relates to a use of the battery protection composite construction as described herein in manufacture of batteries, in particular of vehicles, and especially as thermal runaway barrier.

### Background

Batteries based on Lithium ion technology are currently the preferred solution for automotive e-mobility. Usually, multiple Lithium ion cells are stacked in a row forming a battery module. In common automotive applications, a battery consists of multiple modules within a housing.

Such Lithium ion batteries have an operating window between room temperature and about 40 °C. Above a temperature of from about 80 to 100 °C, there is a risk of uncontrolled electrolyte decomposition followed by additional heat and pressure increase inside the cell. Finally, the separator in the cell will melt and the resulting internal shortcut leads to excessive heat increase called thermal runaway. This also leads to a abrupt and significant increase of gas pressure within the cells, which may break or rupture the cells, leading to hot gases being blown out of the cells at temperatures above 1200 °C, which on top may ignite outside the cell and lead to damage of the surrounding cells, with the same outcome. Of course, this scenario is of great concern in construction of modern electrical vehicles, in particular automobiles. Recent regulations and legislations have already taken account on this, calling for a minimum time after occurrence of a thermal runaway event in which the passengers may leave the vehicle safely.

Therefore, there exists a desire in the art for materials which may stop or at least significantly slow down such a thermal runaway, i.e. which exhibits a thermal resistance, mechanical strength, and/or is easily accessible and manufactured.

### Summary

The present disclosure provides a battery protection composite construction, comprising
(a) At least one mesh or fabric comprising at least one material selected from metals, carbon fiber, and ceramic fiber, and any combinations and mixtures thereof; and
(b) At least one inorganic insulation layer;
(c) Optionally, at least one metal layer;
(d) Optionally, at least one layer distinct from (a), (b) and (c).

The present disclosure further provides a battery casing, comprising the battery protection composite construction as described herein.

Furthermore, the present disclosure provides a method for producing a battery protection composite construction, the method comprising the following steps:
(i) coating at least one metal mesh with an inorganic paste onto at least one surface such that the at least one metal mesh is immersed in the inorganic paste;
(ii) optionally, applying at least one metal layer onto at least one surface of the construction obtained in step (i);
(iii) optionally, applying at least one layer distinct from the construction obtained in step (i) and from the at least one metal layer onto at least one surface of the construction obtained in the steps (i) and/or (ii); and
(iv) curing the construction obtained in the previous steps.

Finally, the present disclosure provides a use of the battery protection composite construction for producing batteries.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The present disclosure provides a battery protection composite construction, comprising
(a) At least one mesh or fabric comprising at least one material selected from metals, carbon fiber, and ceramic fiber, and any combinations and mixtures thereof; and
(b) At least one inorganic insulation layer;
(c) Optionally, at least one metal layer;
(d) Optionally, at least one layer distinct from (a), (b) and (c).

The battery protection composite construction according to the present disclosure may exhibit at least one or even a combination of desirable properties such as good handling properties, cheap and easy production, non-toxic, the ability to be bend and shaped, and the ability to withstand high temperatures, in particular when high temperatures and/or a stream of particles and/or gases are inflicted only locally or on small areas of the battery composite construction. Accordingly, the battery protection composite construction according to the present disclosure is highly suitable for mitigating or even preventing the high-temperature and high-velocity outbursts which typically occur during a thermal runaway event in a modern battery, e.g. a lithium ion battery used in modern vehicles.

The battery protection composite construction according to the present disclosure may assume any form or shape, but will have in most cases a sheet-like appearance. Thus, in the following a sheet-like case will be assumed for discussing the present disclosure and its various embodiments. Generally, when producing the battery protection composite construction according to the present disclosure, it will have a sheet-like appearance. Notwithstanding this fact, it may then be bend, formed, shaped or machined into the desired shapes and sizes. Also, die-cuts are possible.

Preferably, the at least one mesh or fabric (a) is arranged layer-wise between at least two inorganic insulation layers (b). This has the advantage that the battery protection composite construction as described herein may be attached from both major surfaces, and may be used independent from which side a thermal battery event might be expected. While not wanting to be bound by theory, it is assumed that the inorganic insulation layer may be responsible for insulating the construction against local impact of heat and/or impact of gases and/or particles, the mesh or fabric may be responsible to dissipate heat and/or impact throughout the construction, i.e. away from the impact site. Also, the mesh or fabric may also impart structural stability to the construction, and confer to a certain flexibility and/or the ability to be bend and shaped into various shapes. In particular, it is preferred that the at least one mesh or fabric is embedded in the at least one inorganic insulation layer.

The at least one mesh or fabric of layer (a) is comprising at least one material selected from metals, carbon fiber, and ceramic fiber, and any combinations and mixtures thereof. This has the advantage that a certain stability and flexibility is conferred to the composite construction as described herein. Furthermore, heat and mechanical stress may be dissipated away from the site of the impact. This will also help the composite construction to withstand the mechanical and heat stresses typically occurring during thermal runaway events in modern batteries. Preferably, the at least mesh or fabric (a) is selected from a metal mesh, a metal net, a metal mat, a metal mat of wires, a carbon fiber mesh, a carbon fiber fabric, a ceramic fiber mesh, and/or a ceramic fabric. In this regard, it is preferred that the metal is selected from aluminium, copper, titanium, iron, steel, and any combinations therefrom. Metals of this kind exhibit typically one or a combination of stability, flexibility, electrical conductivity, thermal conductivity, commercial availability, and being lightweight. Steel or titanium are preferred, and fire-resistant steel is particularly preferred. Preferably, the at least one mesh or fabric is a steel mesh or fabric, in particular a steel mesh. The mesh may have a wire strength of at least 0.2 mm and a mesh width of at least 0.3 mm. Fire-resistant steel and meshs made therefrom are readily commercially available. The ceramic fiber is preferably a polycrystalline fiber, preferably a polycrystalline aluminium oxide fiber. Fibers of this type are found to be advantageous in that they also exhibit great mechanical and thermal stability. They are available, for example, under the trade designation Nextel from 3M Company, USA.

The inorganic insulation layer comprises inorganic compounds selected from silicates, clays, minerals and any combinations and mixtures thereof. This has the effect that a certain mechanical stability is achieved. The greater advantage is, however, the efficacy in shielding from the heat and/or blast typically developed in a thermal runaway event. Also, these compounds are readily available and non-toxic, which is advantageous in production and handling of the battery protection composite construction according to the present disclosure. Preferably, the inorganic insulation layer comprises at least one silicate. Silicates usually are able to build a network-like structure, which adds to the thermal stability. It is preferred that the at least one silicate is selected from alkaline silicates, earth alkaline silicates, aluminium silicates, and any combinations and mixtures thereof. Preferably, the at least one silicate is selected from lithium silicates, sodium silicates, potassium silicates, calcium silicates, magnesium silicates, aluminium silicates, and preferably from lithium silicates, sodium silicates, potassium silicates and aluminium silicates, and any combinations and mixtures thereof. The battery protection composite construction as disclosed herein is typically employed directly adjacent to metal plates forming the battery lid or casing. In case of aluminium casings or lids, the silicates may during its formation partially dissolve metal ions from the casing or lids, which then facilitate the formation of a tight binding between the composite construction as described herein and the battery lid or casing. This eliminates the need for additional adhesives. Furthermore, the inorganic insulation layer may further comprise clay minerals. These minerals may further increase the heat-shielding and/or heat-resistant effect of the inorganic insulation layer as described herein. Preferred and advantageous examples comprise minerals selected from kaolin, metakaolin, mica, preferably phlogopite or muscovite, quartz, mullite, wollastonite, cordierite, corundum, titania, magnesia, zirconia, perlite, vermiculite, diatomite, zeolithe, and any combinations and mixtures thereof. The inorganic insulation layer may further comprise at least one material selected from inorganic fibers, glass fibers, carbon fibers, glass bubbles, glass spheres, metal fibers, and any combinations and mixtures thereof. It is further preferred that the inorganic insulation layer further comprises at least one silicone. This may have the effect that the inorganic insulation layer is not brittle or inflexible, but exhibits a certain flexibility, without losing the heat-shielding capability. In this regard, the term "silicone" has the common meaning in the art. Usually, it describes compounds comprising at least one polysiloxane. They denote polymerized siloxanes which consist of an inorganic silicon-oxygen backbone chain with organic groups (e.g. methyl) attached to each silicon center. The materials may be cyclic or polymeric. By variation of the chain lengths, side groups, and crosslinking, silicones may be synthesized with a wide variety of properties and compositions. Preferably, the at least one silicone is selected from silicone rubbers. This has the advantage of achieving good flexibility, good thermal and mechanical resistivity, and also a certain resistivity against moisture. Silicone rubbers are usually available as pastes, which may be applied to the desired thickness and shape, and be subsequently cured. Curing systems include platinum-based cure systems, condensation cure systems, and peroxide cure systems. Condensation cure systems may be advantageous herein due to their ease of application. Preferably, the other components, in particular the at least one clay mineral, is compounded into the silicone, preferably the silicone rubber. This will ease the application of the layer, the embedment of the at least one mesh or fabric, and general manufacture of the composite construction as described herein. Similarly, it is preferred that the battery protection composite construction according to the present disclosure further comprises at least one silicone layer adjacent to the inorganic insulation layer. This may have similar effects like the incorporation of silicone, in particular silicone rubber, into the at least one inorganic insulation layer. Accordingly, the aforementioned silicones also apply to the silicones of the additional silicone layer.

The battery protection composite construction according to the present disclosure may exhibit a thickness of at least 0.1 mm, preferably at least 0.25 mm, and more preferably at least 0.5 mm. Smaller thickness were found to be either not effective or unpracticable for the intended applications and purposes. Similarly, the battery protection composite construction according to the present disclosure may exhibit a thickness of up to 20 mm.

Furthermore, the battery protection composite construction according to the present disclosure further comprises at least one metal layer (c). This may have the effect of additional mechanical strength and/or even increased resistivity against mechanical or thermal stress. On the other hand, the metal layer may already form part of the battery, e.g. the casing or the lid. In this regard, the composite construction as described herein may be an integral part of the battery construction itself. Preferably, the at least one metal layer (c) is selected from metal fabric, metal mesh or metal foil, preferably selected from aluminium and steel, titanium. More preferably, the metal layer (c) is a metal plate. It is particularly preferred that the at least one ceramic insulation layer is bonded to the metal plate. Advantageously, the at least one ceramic insulation layer is inorganically bonded to the metal plate. This has the advantage that a more intimate contact on chemical level may be achieve between the plate and the inorganic insulation layer. That is, inorganically bonding preferably does not comprise an additional adhesive.

It is further preferred that the at least one inorganic insulation layer (b) further comprises at least one spacer material selected from inorganic and/or organic spacer materials. This may have the advantage of achieving a certain and preferably even distance between the metal mesh or metal fabric of the composite construction and the metal plate to be shielded, even upon machining, bending or otherwise handling the composite construction as described herein. Also, it may be advantageous that there is no direct contact between the metal mesh of the present composite construction and the metal plate in order to avoid possible electrical shortcuts. Preferably, the at least one spacer material is selected from minerals, ceramics, glass, polymers and any combination and mixture thereof. In this regard, it is preferred that the inorganic spacer material exhibits a grain size of at least 0.1 mm, preferably of at least 0.2 mm, and more preferably of at least 0.3 mm. Smaller grain sizes will probably not be able to achieve the desired effect, in particular upon bending or shaping the composite construction as described herein. Similarly, it is preferred that the inorganic spacer material exhibits a grain size of up to 2 mm, preferably up to 12 mm, and more preferably of up to 10 mm. Preferably, the inorganic spacer material is selected from glass bubbles, glass spheres, glass particles, ceramic spheres, ceramic spheres, and mineral particles. Preferred examples include quartz, spinel, olivine, cordierite, perlite, zeolithe, wollastonite, kieselguhr, unexpanded vermiculite, iron oxide, aluminium oxide, and any combinations and mixtures thereof.

With regard to the shape of the composite construction described herein, it may a shape in the form of a plate, a sheet, an L-formed plate, a U-formed plate, or may even be box-formed. Accordingly, the battery protection composite construction according to the present disclosure may already form at least part of a battery casing of a modern high-performance battery used in electrical-driven automobiles. Therefore, the present disclosure further provides a battery casing, comprising the battery protection composite construction as described herein. Preferably, the battery is a battery is a stationary battery or a battery of a vehicle, preferably a car, a truck, a bus, or a train, more preferably a car, a bus, or a truck. In this regard, it is preferred that the battery is a lithium-ion-battery.

The present disclosure further provides a method for producing a battery protection composite construction, the method comprising the following steps:
(i) coating at least one metal mesh with an inorganic paste onto at least one surface such that the at least one metal mesh is immersed in the inorganic paste;
(ii) optionally, applying at least one metal layer onto at least one surface of the construction obtained in step (i);
(iii) optionally, applying at least one layer distinct from the construction obtained in step (i) and from the at least one metal layer onto at least one surface of the construction obtained in the steps (i) and/or (ii); and
(iv) curing the construction obtained in the previous steps.

Herein, the inorganic paste preferably comprises at least one silicate, preferably selected from alkaline silicates, earth alkaline silicates, aluminium silicates, and any combinations and mixtures thereof. More specifically, the at least one silicate is selected from sodium silicates, potassium silicates, calcium silicates, magnesium silicates, aluminium silicates, and preferably from sodium silicates and potassium silicates and aluminium silicates, and any combinations and mixtures thereof. Furthermore, the at least one inorganic paste further comprises at least one clay mineral. It is understood that the clay mineral is the same as described above in conjunction with the at least one inorganic layer, so reference is made to this part of the present disclosure. The same applies to other ingredients such as filler materials, e.g. inorganic fibers, glass bubbles and the like. Furthermore, it is preferred that the at least one inorganic paste comprises water and/or at least one silicone, preferably silicone rubber. While water has the advantage of being readily available and being able to transform a mixture of silicates and clay minerals into a paste, which then may be easily applied onto the mesh or fabric, the use of silicone, in particular silicone rubber has the advantage of achieving a certain flexibility of the inorganic insulation layer obtained from the inorganic paste as described herein. Again, reference is made to the disclosure set forth herein in conjunction with the inorganic insulation layer as described herein. The same applies to the metal mesh, the inorganic spacer and the additional metal plate as described herein in conjunction with the battery protection composite construction according to the present disclosure. Coating of the mesh or fabric, in particular the metal mesh or fabric as described herein, may be easily achieved by techniques known and established in the art.

In step (iv) of the method as described herein, the construction obtained in the previous steps is cured. That is, it is in particular the inorganic paste which is cured to form the at least one inorganic insulation layer as described herein. Preferably, during this curing step an inorganic bonding between the at least one inorganic paste and the at least one metal plate is achieved. Curing may also comprise applying a stream of air, applying heat, applying a vacuum, and any combinations thereof. "Curing" may also comprise "drying", i.e. the removal of water from the paste/the construction. Drying may be carried out at a temperature of at least 15 °C, preferably at least 20 °C, and more preferably of at least 23 °C. Drying may be carried out at a temperature of up to 300 °C, preferably up to 250 °C, and more preferably up to 200 °C. Accordingly, it is preferred that drying is carried out at a temperature in the range of from 15 to 300 °C, preferably from 20 to 250 °C, and more preferably from 23 to 200 °C.

Prior to curing in step (iv), the construction may be shaped. Preferably, shaping comprises bending, stamping, press-forming, die-cutting, and any combinations thereof. In this regard, it is preferred that shaping comprises shaping of the construction in an L-shape, U-shape, prismatic shape, tube shape, or box-shape.

The present disclosure further provides a battery protection, obtained by the method as described herein.

Furthermore, the present disclosure provides a use of the battery protection composition construction as described herein for producing batteries. Preferably, the battery is a stationary battery such as a battery for a building, or a battery of a vehicle. The battery is preferably a lithium ion battery. The vehicle is preferably the vehicle is a car, a truck, a bus, or a train. Due to the excellent properties of the battery protection composition construction as described herein with regard to the prevention or mitigation of a thermal runaway event, it is preferred that the use is a thermal runaway barrier.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Torch and Grit Test (T&GT)

Each sample was mounted to a either a 0.7 mm thick galvanized steel or stainless-steel sheet by VHB tape (3M Company). The sample was positioned 44.5 mm from the nozzle of a Champion Bench hydrogen torch burner obtained from Bethlehem Apparatus Company Inc, of Hellertown, PA, USA. A thermocouple (TC0) was positioned 31.8 mm from the nozzle of the burner and another was placed on the backside center of the steel sheet. A blaster gun was loaded with 120 grit aluminum oxide non-shaped media and aligned with the nozzle of the torch at the same distance (44.5 mm) from the sample. The torch of the Champion Bench Burner was adjusted to 1200 °C. The media blaster gun was then triggered at 172.4 kPa or 344.7 kPa. A sample was either: 1) exposed to 12 blast cycles each lasting 15 seconds with 10 seconds of active blast time and 5 seconds of inactive blast time at a target location or 2) exposed to 1 blast cycle lasting 20 seconds with 5 seconds of inactive blast time, followed by 10 seconds of active blast, and then 5 seconds of inactive blast time at three target locations spaced 38.1 mm (1.5 inches) apart. Sample testing was stopped if a hole caused by either burn through or the media blasts was visible in the layers of the barrier article.

### Dielectric strength test

Dielectric strength of the material was determined in accordance with VDE 303-2208-2014 using a 6 mm diameter diode. The tests were carried out at voltages from 1 to 8 kV. When a sample survived the maximum setting of 8 kV, the rating "passed" was given. Failure at any power setting was given the rating "failed".

### Free Fall Shock test

A simple free fall shock test to evaluate the mechanical stability of the samples (as expected in automotive applications from road shock, acceleration and vibration) was carried out. The following protocol was followed: Samples of the examples and comparative examples as also used in the torch & grit tests were dropped from a height of 1.8 m to the floor. This procedure was followed for 20 cycles. After each cycle, the sample was visually inspected for damage such as cracks, parts fallen off, or breaking of the construction.

### Preparation

Constructions having the following layers were generated:
1.) ECR Glass Vlies 50 g/m² 0.5 mm thickness
2.) Ceramic insulation paste
3.) Fabric
4.) Ceramic insulation paste
5.) ECR Glass Vlies 50 g/m² 0.5 mm thickness

Layers 1.) and 2.) were used to wrap layers 2.) and 4.) to enable proper handling during production until drying was completed.

Generally, a ceramic insulation paste was prepared by mixing the ingredients set forth in tables 1 to 4 with water such that a ceramic paste was obtained. This ceramic paste was then coated onto both sides of the fabric such that the fabric was immersed in the ceramic paste, i.e. both sides were completely covered by the ceramic paste. Afterwards, the ECR glass vlies was applied to both ceramic insulation pastes. Finally, this construction was dried at room temperature for 3 h.

**Table 1: ceramic paste formulation 1.**

| | g | solid g | solid % |
|---|---|---|---|
| Nalco 2327 | 50 | 15 | 22.7 |
| Metakaolin | 40 | 40 | 60.6 |
| Silicone resin | 20 | 11 | 16.7 |

**Table 2: ceramic paste formulation 2.**

| | g | solid g | solid % |
|---|---|---|---|
| Potassium and/or Lithium Silicate | 50 | 15 | 31.3 |
| Metakaolin | 33 | 33 | 68.8 |

**Table 3: ceramic paste formulation 3.**

| | g | solid g | solid % |
|---|---|---|---|
| Potassium and/or Lithium Silicate | 50 | 15 | 27.3 |
| Metakaolin | 20 | 20 | 36.4 |
| Mullite | 20 | 20 | 36.4 |

**Table 4: ceramic paste formulation 4.**

| | g | solid g | solid % |
|---|---|---|---|
| Potassium and/or Lithium Silicate | 50 | 15 | 30.0 |
| Metakaolin | 20 | 20 | 40.0 |
| Wollastonite | 15 | 15 | 30.0 |

**Table 5: Examples and Comparative Examples of composite constructions.**

| Sample | Fabric | Formulation | Dry composite [g/square meter] |
|---|---|---|---|
| Comp. Ex. 1 | IsoGlas Frenzelit | 1 | 1353 |
| Ex. 1 | Steel 1.4828 MW 0.6 mm, diameter wire 0.18 mm | 1 | 1889 |
| Ex. 2 | Steel 1.4828 MW 0.3 mm, diameter wire 0.2 mm | 1 | 1889 |
| Ex. 3 | Steel 1.4301 MW 1.5 mm, diameter wire 0.3 mm | 2 | 1706 |
| Ex. 4 | Steel 1.4301 MW 1.5 mm, diameter wire 0.3 mm | 3 | 1917 |
| Ex. 5 | Steel 1.4301 MW 1.5 mm, diameter wire 0.3 mm | 4 | 1869 |

The results of the torch & grit tests are summarized in table 9.

### Ex. 6: Inorganic bonding of construction to metal plate

The construction obtained in Ex. 4 was applied to an aluminium plate as used in the burn-through test before drying. When applied, the construction on the aluminium plate was dried. As comparative example 2, a dried construction according to ex. 4 was attached via an organic, commercially available adhesive onto an aluminium plate as used during the burn-through test. After curing, initial shock tests were carried out. While the comparative example fell apart after two cycles, the inorganically bonded example survived a complete test of 20 cycles. Also, blast resistance in the burn-through test was improved from 17 to over 20 s. The aluminium plate was not damaged in these cases.

### Ex. 7: Inorganic spacer

A construction was build up in accordance with Ex. 6 with the following differences: On one side of the metal mesh, only a thin layer of the ceramic paste was applied, and inorganic/mineral spacer particles (Raw/unexpanded perlite having a medium particle size larger than 600 micrometer) were strewn onto this layer. After that, ceramic paste was applied, the resulting layer was covered with e-glass nonwoven, and this construction was applied onto a metal plate as used in the torch and grit test. Drying was carried out as described above, and a stable and robust inorganic bond of the construction to the aluminium metal plate was obtained.

### Ex. 8: Silicone rubber layer

The following construction was generated:
The following construction was generated:
1.) Silicone/latex rubber
2.) Ceramic insulation paste
3.) Steel/metal fabric
4.) Ceramic insulation paste
5.) Silicone/latex rubber or direct mount on the metal plate

The steel fabric was impregnated from both sides with the ceramic paste such that the steel fabric was embedded in the ceramic paste. The resulting ceramic metal composite was dried at room temperature for 2 h. After that, the ceramic metal composite was impregnated with silicone rubber from both sides. The resulting composite construction was dried at room temperature for further 2 h. It appeared that the components had reacted with each other and formed a very stable construction in that the silicone rubber became inseparable from the ceramic metal composite. After the drying process, the samples were very flexible and could be bend and shaped without the ceramic layer breaking or losing parts. Hence, a flexible battery protection composite construction was obtained. Further, the sample of this example was also tested in the torch and grit test procedure as described herein. Also, the dielectric strength of the construction according to ex. 8 and comp. ex. 2 was determined. The results are summarized in table 8.

### Ex. 9: Silicone rubber in ceramic layer

The following construction was generated:
1.) Ceramic layer (Silicone rubber and inorganic fillers)
2.) Steel/metal fabric (inorganic fiber could also be an option)
3.) Ceramic layer (silicone rubber and inorganic fillers)

The ceramic layers of 1.) and 3.) had the composition summarized in table 6:

**Table 6: Composition of ceramic layer of ex. 9.**

| compound | Silicone rubber | Metakaolin | Mullite |
|---|---|---|---|
| ratio [wt.-%] | 63.2 | 10.5 | 26.3 |

The compounds were compounded together and then used to impregnate the steel fabric, following the general procedure of the previous examples. The resulting construction was dried at room temperature for 2 h, after which it was found to be very stable as well as bendable and flexible. As comparative example 3, the procedure was repeated, but this time with pure silicone rubber without any inorganic fillers (i.e. metakaolin and mullite). The temperature resistance of the constructions of ex. 9 and comp. ex. 3 were tested in a furnace at different temperatures. Visual inspection with the naked eye followed. An damaged construction (gaps, molten parts, etc.) was considered "pass", whereas a visually unchanged construction (no gaps, molten parts, etc.) was considered "fail". The results are summarized in table 7.

**Table 7: Furnace temperature test of ex. 9 and comp. ex. 3.**

| | 10 min at 300 °C | 10 min at 400 °C | 10 min at 500 °C | 10 min at 600 °C | 10 min at 800 °C | 10 min at 1000 °C | 10 min at 1200 °C |
|---|---|---|---|---|---|---|---|
| Ex. 9 | pass | pass | pass | pass | pass | pass | pass |
| Comp. Ex. 3 | pass | fail | fail | fail | fail | fail | fail |

It was observed that comp. ex. 3 without inorganic fillers in the ceramic layer (i.e. pure silicone rubber layer) collapsed at 400 °C. Thus, the material is not stable. Only a powdery substance (presumably silicon dioxide) was obtained after subjecting the samples of comp. ex. 3 to the higher temperatures. In contrast, the construction of ex. 9 was stable even at 1200 °C. Also, the dielectric strength was determined. The results are summarized in table 8.

**Table 8: Determination of dielectric strength.**

| Sample | 1 kV | 8 kV |
|---|---|---|
| Ex. 3 (ohne Silikon) | fail | fail |
| Ex. 8 (Sili-Schicht) | pass | pass |
| Ex. 9 (Sili-Compound) | pass | pass |

Table 9 summarizes the results of various examples and comparative example in the torch & grit test.

**Table 9: Results of the torch & grit test of examples and comparative examples.**

| sample | TG&T number of blasts | result |
|---|---|---|
| Comp. ex. 1 | 1 | fail |
| Comp. ex. 2 | 1 | fail |
| Ex. 1 | 12 | pass |
| Ex. 2 | 12 | pass |
| Ex. 3 | 12 | pass |
| Ex. 4 | 12 | pass |
| Ex. 5 | 12 | pass |
| Ex. 6 | 12 | pass |
| Ex. 7 | 12 | pass |
| Ex. 8 | 12 | pass |
| Ex. 9 | 12 | pass |

## Claims

1. Battery protection composite construction, comprising
(a) At least one mesh or fabric comprising at least one material selected from metals, carbon fiber, and ceramic fiber, and any combinations and mixtures thereof; and
(b) At least one inorganic insulation layer;
(c) Optionally, at least one metal layer;
(d) Optionally, at least one layer distinct from (a), (b) and (c).

2. The battery protection composite construction according to claim 1, wherein the at least one mesh (a) is embedded in the at least one ceramic insulation layer (b).

3. The battery protection composite construction according to claim 1 or claim 2, wherein the metal is selected from steel and titanium, preferably from steel, more preferably from fire-resistant steel.

4. The battery protection composite construction according to any one of the preceding claims, wherein the ceramic fiber is a polycrystalline fiber, preferably a polycrystalline aluminium oxide fiber.

5. The battery protection composite construction according to any one of the preceding claims, wherein the inorganic insulation layer comprises inorganic compounds selected from silicates, clays, minerals and any combinations and mixtures thereof.

6. The battery protection composite construction according to claim 5, wherein the inorganic insulation layer comprises at least one silicate, preferably selected from alkaline silicates, earth alkaline silicates, aluminium silicates, and any combinations and mixtures thereof.

7. The battery protection composite construction according to any one of claims the preceding claims, wherein the inorganic insulation layer comprises clay minerals, preferably selected from kaolin, metakaolin, mica, preferably phlogopite or muscovite, quartz, mullite, wollastonite, cordierite, corundum, titania, magnesia, zirconia, perlite, vermiculite, diatomite, zeolithe, and any combinations and mixtures thereof.

8. The battery protection composite construction according to any one of the preceding claims, wherein the inorganic insulation layer further comprises at least one silicone, preferably selected from silicone rubbers.

9. The battery protection composite construction according to any one of the preceding claims, wherein the battery protection composite construction further comprises at least one silicone layer, preferably a silicone rubber layer, adjacent to the inorganic insulation layer.

10. The battery protection composite construction according to any one of the preceding claims, wherein the at least one inorganic insulation layer (b) further comprises at least one spacer material selected from inorganic and/or organic spacer materials, preferably wherein the inorganic spacer material is selected from glass bubbles, glass spheres, glass particles, ceramic spheres, ceramic spheres, and mineral particles.

11. The battery protection composite construction according to any one of the preceding claims, wherein the battery safety construction has a shape in the form of a plate, a sheet, an L-formed plate, a U-formed plate, box-formed.

12. A battery casing, comprising the battery protection composite construction according to any one of the preceding claims.

13. A method for producing a battery protection composite construction, the method comprising the following steps:
(i) coating at least one metal mesh with an inorganic paste onto at least one surface such that the at least one metal mesh is immersed in the inorganic paste;
(ii) optionally, applying at least one metal layer onto at least one surface of the construction obtained in step (i);
(iii) optionally, applying at least one layer distinct from the construction obtained in step (i) and from the at least one metal layer onto at least one surface of the construction obtained in the steps (i) and/or (ii); and
(iv) curing the construction obtained in the previous steps.

14. Use of the battery protection composition construction according to any one of claims 1 to 11 for producing batteries, wherein the battery is a stationary battery such as a battery for a building, or a battery of a vehicle.

15. Use according to claim 14, wherein the vehicle is a car, a truck, a bus, or a train.
